# EUROPEAN PATENT APPLICATION

(11) **EP 2 476 928 A1**
(43) Date of publication of application: **18.07.2012**
(21) Application number: 11425010.3
(22) Date of filing: 18.01.2011
(51) Int. Cl.: F16D 37/02

(54) **Automotive fluidic pump**

(71) Applicant: Pierburg Pump Technology Italy S.p.A., 66034 Lanciano (IT)
(72) Inventor: Armenio, Giacomo, 57128 Livorno (IT); Novi, Nicola, 56100 Pisa (IT)
(74) Representative: Eberlein, Jasper

(57) **Abstract**

The invention refers to a mechanical automotive fluidic pump (10) with a driving means (30) and a pump wheel (88), both being connectable by a hydraulic coupling (60) which is a magneto-rheological coupling (60). The coupling (60) is provided with a rotatable driving clutch element (39, 41) being permanently connected to the driving means (30), a rotatable driven clutch element (29) being permanently connected to the pump wheel (22) and a magneto-rheological liquid (62) filling a working gap (42, 44) between the two elements (29,39,41).

According to the invention a magnet arrangement (36) with a permanent magnet (54) magnetically affecting the working gap (42, 44) and with an electromagnet (50) magnetically affecting the working gap (42, 44) are provided, whereby the electromagnet (50) is arranged to compensate the magnetic field (70) caused by the permanent magnet (54) in the working gap (42, 44) when the electromagnet (50) is active.

If the electromagnet fails, the coupling remains engaged connected so that the coupling is failsafe.

## Description

The present invention refers to a mechanical automotive fluidic pump which is directly mechanically driven by an internal combustion engine. The fluidic pump can be a pneumatic or a liquid pump.

A mechanical automotive fluidic pump is directly driven by the combustion engine so that the rotational frequency of the pump is proportional to the rotational frequency of the engine. For an improved adaptation of the pumping performance to the pumping performance demand the pump is provided with a coupling. The pumping performance of the pump is adapted by engaging and disengaging the coupling thereby connecting and disconnecting the pump wheel with/from an actuated driving means which can be a belt pulley driven by the engine.

US 2005/0188690 A1 and US 7 422 093 B2 disclose a coupling for an automotive hydraulic power steering pump, whereby the coupling is realized in the form of a magneto-rheological coupling. The coupling is provided with a driven clutch element being permanently connected to the pump wheel, with a driving clutch element being permanently connected to the pulley wheel and with a magneto-rheological liquid filling a working gap between the two clutch elements. The coupling is engaged or connected by activating an electromagnet so that the magnetic field generated by the electromagnet penetrates the working gap so that the magnetic field immediately causes an increased viscosity of the magneto-rheological liquid. If the electromagnet fails, the coupling can not be engaged or connected. This arrangement is not failsafe so that it is not suitable for pumps with essential functions.

It is an object of the invention to provide a failsafe mechanical automotive fluidic pump.

This object is achieved with a combination of the features of claim 1.

The mechanical automotive fluidic pump according to the invention is provided with a magneto-rheological coupling which is provided with a permanent magnet magnetically affecting the working gap and with an electromagnet magnetically affecting the working gap as well. When the electromagnet is not activated, only the permanent magnet affects the magneto-rheological liquid in the working gap so that the viscosity of the liquid is high and the coupling is engaged or connected. When the electromagnet is activated, i.e. electrically energized, the magnetic field generated by the permanent magnet affecting the working gap is significantly compensated so that the resulting magnetic field is decreased significantly. This decreased magnetic field in the working gap has the effect that the viscosity of the magneto-rheological liquid is significantly decreased, so that the coupling is more or less disconnected.

If the electromagnet should fail the coupling will always be engaged or connected so that the coupling of the pump and the pump itself are failsafe. This failsafe arrangement of a magneto-rheological coupling is generally applicable for many other applications of a magneto-rheological coupling, and is principally not limited to a pump.

According to a preferred embodiment, the fluidic pump is a coolant pump and the driving means is a pulley wheel driven by an internal combustion engine via a transmission belt. The functionality of a coolant pump pumping a coolant for cooling an internal combustion engine is of essential significance for the life of the internal combustion engine so that the coolant pump must not fail, even if electric or electronic problems occur. Therefore, the fail safe pump is suitable for an application as a coolant pump.

Preferably, a pump control means is provided which activates the electromagnet as long as the engine's temperature is below a limiting value. When the engine is cold, the pumping performance of the coolant pump is reduced to a minimum by activating the electromagnet. When the coolant temperature is increasing and is higher than the limiting value, the electromagnet is switched off so that the magneto-rheological liquid's viscosity is increased and the clutch is engaged.

According to a preferred embodiment the magnetic arrangement with the electromagnet and/or the permanent magnet are arranged non-rotating and are a stationary part of the pump. The electromagnet and the permanent magnet can be fixedly connected to the pump frame. The static arrangement of the electromagnet makes it easier to electrically connect the electromagnet with a non-rotating control means.

Preferably, the permanent magnet is a magnet ring and the electromagnet is a ring coil which is surrounded by a toroidal or in cross-section U-shaped back iron with the opening radially outwardly. The magnetizing of the permanent ring magnet is in-line with the back iron so that the magnetic field of the permanent magnet is in parallel with and overlaps the magnetic field of the activated electromagnet. The permanent magnet is magnetized in-line with the orientation of the activated electromagnet's magnetic field penetrating the permanent magnet.

The permanent magnet can be arranged radially adjacent to the electromagnet ring coil. In this case, the permanent magnet is magnetized axially.

To embodiments of the invention are described with reference to the drawings, wherein:
Figure 1 shows the longitudinal section of a mechanical pneumatic pump, and
   Figure 2 shows a longitudinal section of a mechanical automotive coolant pump.

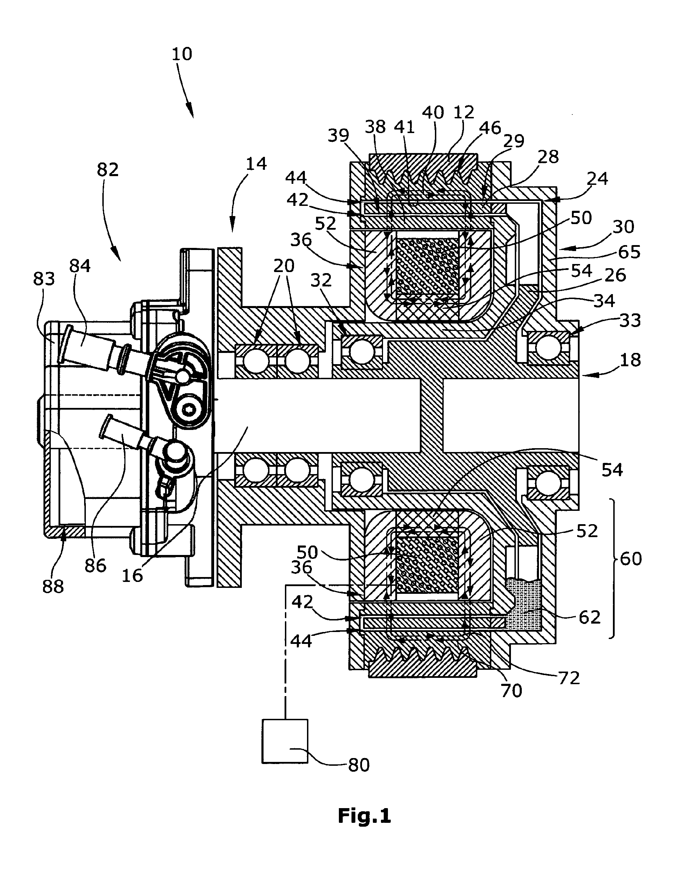

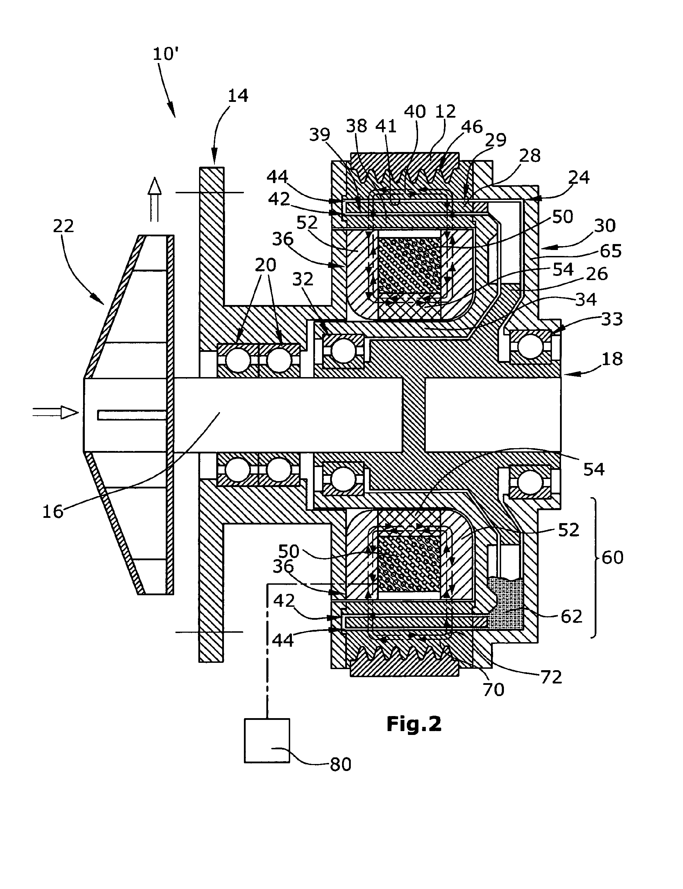

Figure 1 shows a mechanical automotive pneumatic pump 10 and figure 2 shows a mechanical automotive fluidic pump 10' in the form of a coolant pump. Both pumps 10;10' are fluid pumps. The pneumatic pump 10 provides a gas, for example air, under pressure or provides vacuum to other engine's components. The coolant pump 10' provides a liquid coolant to an internal combustion engine. The pumps 10;10' are directly driven by the engine via a transmission belt 12.

Both pumps 10 comprise a pump frame 14;14' which can be mounted to an engine block of the engine (not shown). The pump frame 14;14' supports a rotor shaft 16 of a pump rotor 18 by means of two roller bearings 20. The pump rotor 18 consists of a pump wheel 88;22, the rotor shaft 16 and a rotatable clutch part 24 which is permanently connected to the pump wheel 22 by the rotor shaft 16.

The pneumatic pump 10 is provided with a pump section 82 which comprises the pump housing 83, a pump inlet 84, a pump outlet 86 and a pump rotor 88 inside the housing 83. The coolant pump 10' is provided with impeller pump wheel 22. The housing enclosing of the impeller pump wheel 22 is defined by a respective opening in an engine block (not shown).

The pump rotor 18 and in particular the rotatable clutch part 24 is provided with a cylindrical clutch portion 28 which is connected to the rotor shaft 16 by a substantially radial rotor ring portion 26. The cylindrical clutch portion 28 defines a driven clutch element 29.

The pump 10;10' comprises a rotatable driving means 30 which is rotatably supported by the rotor shaft 16 by means of two roller bearings 32,33. The rotatable driving means 30 is S-shaped in cross-section, whereby the end of the inner axial leg 34 is supported by one roller bearing 32 at the rotor shaft 16. The inner half of the S-shaped driving means 30 encloses a ringlike magnetic unit 36. The outer half of the S-shaped driving means 30 encloses the cylindrical rotor clutch portion 28 defining the driven clutch element 29.

The two cylindrical portions 38, 40 of the outer half of the S-shaped driving means 30 form two rotatable driving clutch elements 39, 41 which define two cylindrical working gaps 42, 44 between them and the driven clutch element 29, respectfully. The radial outside cylindrical portion 40 of the driving means 30 serves as a pulley wheel 46 which is driven by the transmission belt 12. The radial outside cylindrical portion 40 of the driving means 30 is directly rotatably supported by the second roller bearing 33 at the rotor shaft 16 by means of a radial support ring 65.

The magnetic unit 36 consists of a ringlike electromagnet 50 which is surrounded by a - in cross section - U-shaped ringlike back iron 52 which is open to the radial outside. The cylindrical part of the back iron 52 is formed by a ringlike cylindrical permanent magnet 54 which is axially magnetized so that it is magnetized in parallel and in-line with the magnetic field 72 generated by the activated electromagnet 50. The back iron 52 and the radial outside cylindrical portion 40 of the driving means 30 are made of ferromagnetic material and define a toroidal path for the magnetic fields 70, 72.

The permanent magnet 54 generates a toroidal magnetic field 70 which penetrates the working gaps 42, 44 radially. When the electromagnet 50 is active, i.e. energized with electric energy, it generates a toroidal magnetic field 72 as well which is parallel to the magnetic field 70 of the permanent magnet 54 but has an opposite polarity.

The magnetic unit 36 and the clutch elements 29,39,41 define a magneto-rheological coupling 60 whereby the working gaps 42, 44 are filled with a magneto-rheological liquid 62.

When the electromagnet 50 is not active, only the permanent magnet 52 generates a magnetic field 70 which penetrates the working gaps 42, 44. Therefore, the viscosity of the magneto-rheological liquid is high so that the coupling is engaged or connected. When the electromagnet 50 is activated by an external pump control means 80, the magnetic field 72 of the electromagnet 50 substantially compensates the magnetic field 70 of the permanent magnet 52 so that the resulting magnetic field in the working gaps 42, 44 is reduced to a minimum. As a consequence, the viscosity of the magneto-rheological liquid significantly increases so that the coupling is more or less disconnected or disengaged.

The pump control means 80 of the coolant pump 10' activates the electromagnet 50 as long as the engine's temperature is below a limiting value of 70°C, for example.

If the pump control means 80 and/or the electromagnet 50 should fail, the coupling 60 is always automatically in the engaged or connected state. As a consequence, the fluidic pump 10;10' is failsafe.

## Claims

1. Automotive fluidic pump (10;10') with a driving means (30) and a pump wheel (88;22), both being connectable by a hydraulic coupling (60),
the hydraulic coupling (60) being a magneto-rheological coupling (60) with a rotatable driving clutch element (39,41) being permanently connected to the driving means (30), a rotatable driven clutch element (29) being permanently connected to the pump wheel (88;22) and a magneto-rheological liquid (62) filling a working gap (42,44) between the two elements (29,39,41), whereby
a magnetic unit (36) with a permanent magnet (54) magnetically affecting the working gap (42,44) and with an electromagnet (50) magnetically affecting the working gap (42,44) are provided, and the electromagnet (50) is arranged to compensate the magnetic field (70) caused by the permanent magnet (54) in the working gap (42,44) when the electromagnet (50) is activated.

2. Automotive fluidic pump (10') according to one of the preceding claims, whereby the pump (10') is a coolant pump and the driving means (30) is a pulley wheel driven by an internal combustion engine.

3. Automotive fluidic pump (10;10') according to one of the preceding claims, whereby a pump control means (80) is provided which activates the electromagnet (50) as long as the engine's temperature is below a limiting value.

4. Automotive fluidic pump (10;10') according to one of the preceding claims, whereby the electromagnet (50) is non-rotating.

5. Automotive fluidic pump (10;10') according to one of the preceding claims, whereby the permanent magnet (54) is non-rotating.

6. Automotive fluidic pump (10;10') according to one of the preceding claims, whereby the permanent magnet (54) is a magnet ring, the electromagnet (50) is a ring coil and the magnetization of the permanent magnet (54) is in-line with the magnetic field of the activated electromagnet (50) so that the magnetic fields of the activated electromagnet (50) and of the permanent magnet (54) overlap.

7. Automotive fluidic pump (10;10') according to one of the preceding claims, whereby at least a part of the working gap (42,44) is provided cylindrically.

8. Automotive fluidic pump (10; 10') according to one of the preceding claims, whereby the permanent magnet (54) and the electromagnet (50) are provided radially inwardly of the cylindrical working gap (42,44).
